# EUROPÄISCHE PATENTSCHRIFT

(11) **EP 0 630 948 B1**
(45) Veröffentlichungstag und Bekanntmachung des Hinweises auf die Patenterteilung: **17.11.1999**
(21) Anmeldenummer: 94108858.5
(22) Anmeldetag: 09.06.1994
(51) Int. Cl.: C09B 67/22, C09B 67/24, D06P 3/66

(54) **Bifunktionelle Reaktivfarbstoffmischung**
Mixtures of bifunctional reactive dyes
Mélanges de colorants réactifs bifonctionnels

(30) Priorität: 22.06.1993 DE 4320632
(43) Veröffentlichungstag der Anmeldung: 28.12.1994
(73) Patentinhaber: BAYER AG, 51368 Leverkusen (DE)
(72) Erfinder: Hoppe, Manfred, Dr., D-51515 Kürten (DE); Herd, Karl Josef, Dr., D-51519 Odenthal (DE); Bootz, Konrad, Dr., D-58300 Wetter (DE); Ehrenberg, Stefan, Dr., D-50670 Köln (DE); Eizenhöfer, Thomas, Dr., D-50735 Köln (DE); Harms, Wolfgang, Dr., D-51519 Odenthal (DE); Henk, Hermann, Dr., D-51061 Köln (DE); Kunde, Klaus, Dr., D-53819 Neunkirchen (DE); Meier, Stefan, Dr., D-51379 Leverkusen (DE); Reddig, Wolfram, Dr., D-51373 Leverkusen (DE)

(56) Entgegenhaltungen:
- EP-A- 0 044 483
- EP-A- 0 198 198
- EP-A- 0 525 805
- EP-A- 0 545 219
- EP-A- 0 582 893

## Beschreibung

Die Erfindung betrifft eine Mischung von bifunktionellen Reaktivfarbstoffen, die insbesondere beim Färben von Cellulose-Fasern verbesserte anwendungstechnische Ergebnisse zeigen, ein Färbeverfahren sowie gefärbte Substrate.

Zur Verbesserung anwendungstechnischer Eigenschaften und des Warenbildes ist es bereits bekannt, Reaktivfarbstoffe in Abmischungen zu verwenden.

US-A-4 338 093 (=EP-A-44 483) bezieht sich auf Mischungen von Reaktivfarbstoffen, die denselben Farbton ergeben, aber eine unterschiedliche Reaktivität aufweisen. Gemäß Beispiel 6 wird ein Fluortriazin - mit einem Chlortriazin-Farbstoff zusammen verwendet. US-A-5 047 067 beschreibt Mischungen von Reaktivfarbstoffen mit unterschiedlicher Reaktivgruppe, unterschiedlicher Substantivität, aber etwa dem gleichen Farbton. EP-A-525 805 beschreibt eine Mischung aus wenigstens fünf Reaktivfarbstoffen, die zum Teil eine Halogentriazin- und eine Vinylsulfonylgruppe aufweisen können.

Die bekannten Kombinationen haben aber noch Nachteile, so ziehen sie ungleichmäßig auf die zu färbenden Substrate auf, fixieren nicht einheitlich und sind deshalb insbesondere bezüglich ihrer Anwendung auf Kurzflottenfärbeaggregaten beschränkt.

Die vorliegende Erfindung betrifft Reaktivfarbstoffgemische enthaltend einen oder mehrere Monochlortriazin-Farbstoffe der Formel (1) 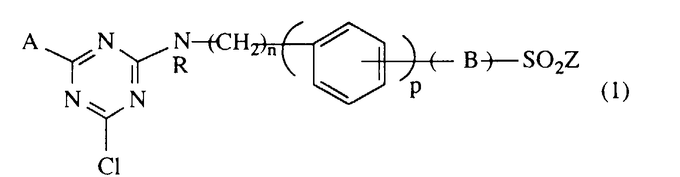 und einen oder mehrere Monofluortriazin-Farbstoffe der Formel (2) 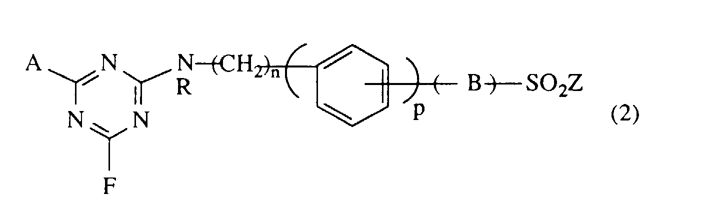 worin bedeuten
- A: chromophorer Rest
- R: H, C₁-C₄-Alkyl, mit OH, SO₃H, OSO₃H, SO₂Z, CN oder CO₂H substituiertes C₁-C₄-Alkyl, Benzyl, Phenyl oder mit Halogen, C₁-C₄-Alkyl, C₁-C₄-Alkoxy, SO₃H oder CO₂H substituiertes Phenyl,
- n: 0, 1, 2 oder 3
- p: 0 oder 1
- B: 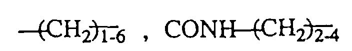 oder direkte Bindung,
- Z: Vinyl oder CH₂CH₂-Y, mit Y = unter alkalischen Bedingungen abspaltbarer Rest, wie z.B. Cl, OSO₃H, S₂O₃H, OCOCH₃, OPO₃H₂ oder OH.

Bevorzugt sind Reaktivfarbstoffgemische enthaltend einen oder mehrere Monochlortriazin-Farbstoffe der Formel (3) 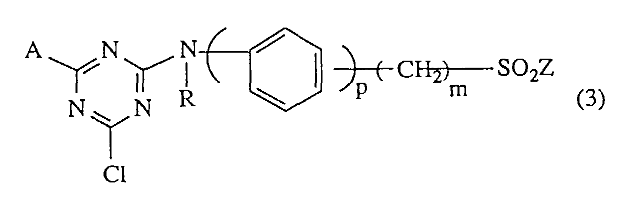 und einen oder mehrere Monofluortriazin-Farbstoffe der Formel (4) 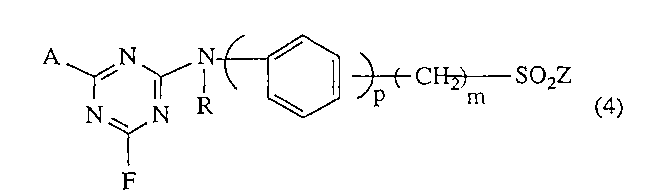 worin bedeuten
- R: H, C₁-C₄-Alkyl, Phenyl oder mit CH₃, SO₃H oder CO₂H substituiertes Phenyl,
- m: 0, 1, oder 3 und
A, p und Z die oben genannte Bedeutung zukommt.

Besonders bevorzugt sind Reaktivfarbstoffgemische enthaltend einen oder mehrere Monochlortriazin-Farbstoffe der Formel (5) 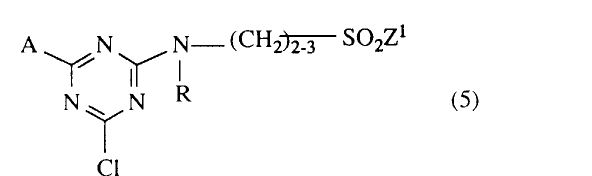 und einen oder mehrere Monofluortriazin-Farbstoffe der Formel (6) 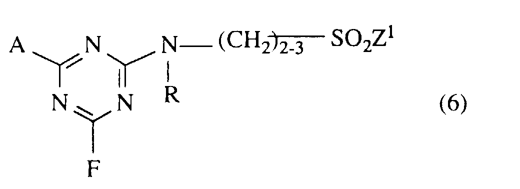 worin bedeuten
- R: Phenyl oder H,
- Z¹: Vinyl, CH₂CH₂Cl oder CH₂CH₂OSO₃H
und A die oben genannte Bedeutung zukommt.

Ebenso bevorzugt sind Reaktivfarbstoffgemische enthaltend einen oder mehrere Monochlortriazin-Farbstoffe der Formel (7) 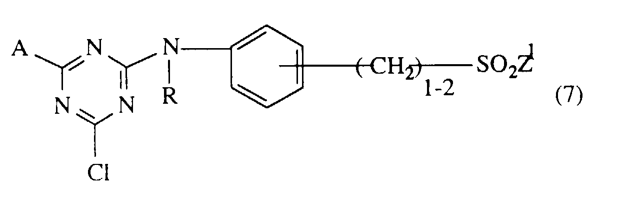 und einen oder mehrere Monofluortriazin-Farbstoffe der Formel (8) 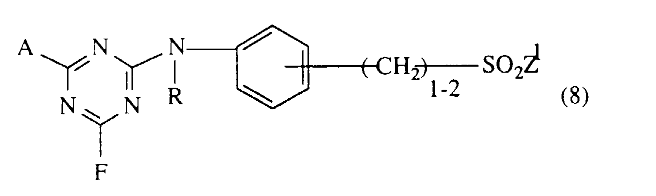 worin bedeuten
- R: H, C₂H₅, CH₂CH₂OH oder CH₂CH₂CO₂H
und A und Z¹ die oben genannte Bedeutung zukommt.

Bevorzugt sind vor allem Zweikomponenten-Reaktivfarbstoffgemische, bei denen in (1) und (2) (bzw. in (3) und (4) bzw. in (5) und (6) bzw. in (7) und (8)) jeweils der chromophore Rest A identisch ist.

A steht für einen chromophoren Rest, wie er für sulfogruppenhaltige wasserlösliche Reaktivfarbstoffe üblich ist, insbesondere für einen chromophoren Rest aus der Azo-, Polyazo-, Metallkomplexazo-, Anthrachinon-, Formazan-, Kupferphthalocyanin- oder Triphendioxazin-Reihe. Der Triazinylrest ist vornehmlich an eine Aminofunktion im chromophoren Rest A gebunden.

Beispiele für den Rest A auf Basis von Azofarbstoffen sind: 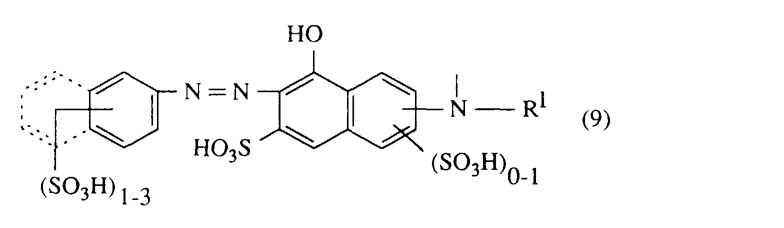 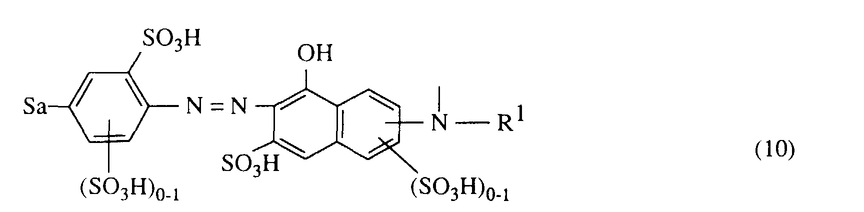 mit Sa = OCH₃ oder OC₂H₅ 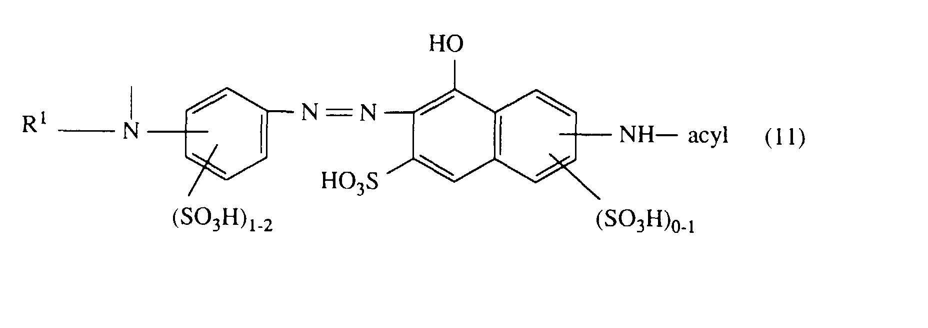 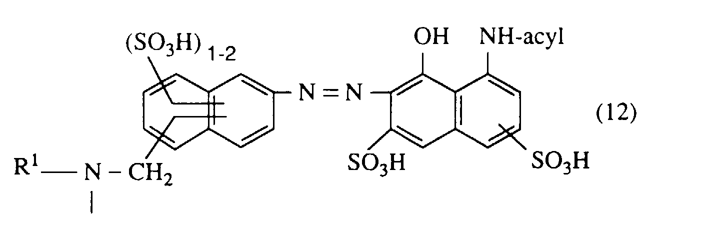 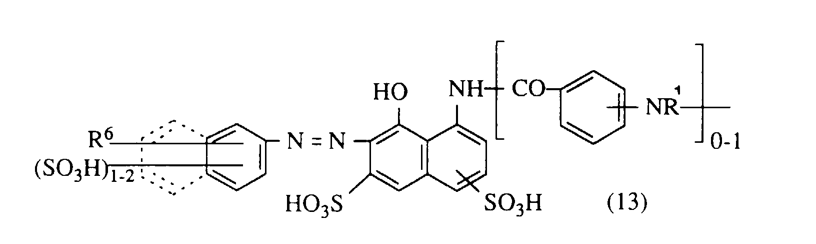 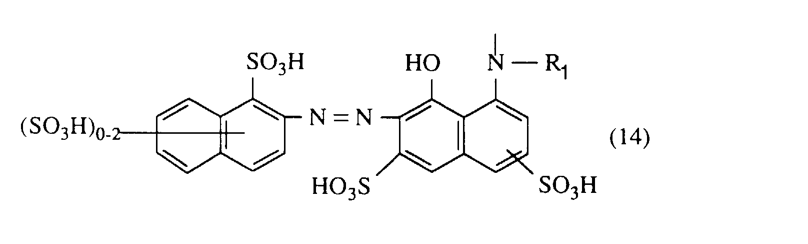 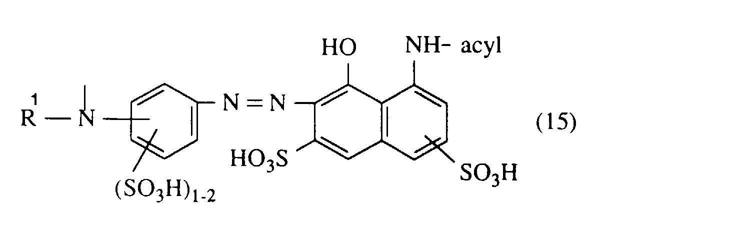 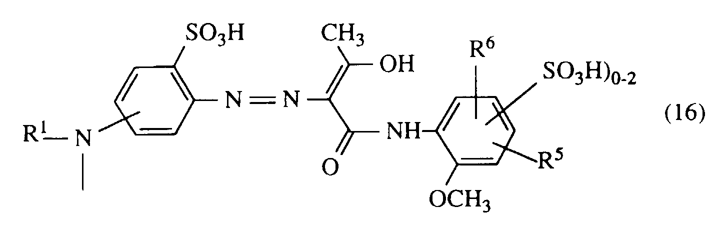 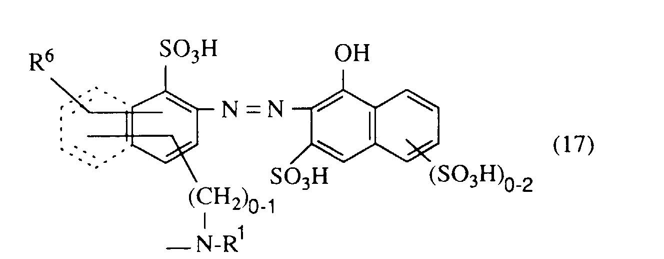 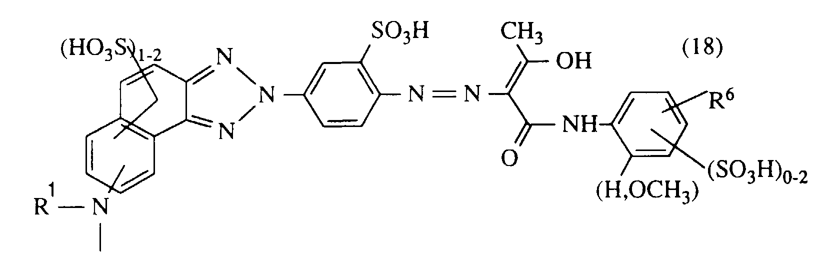 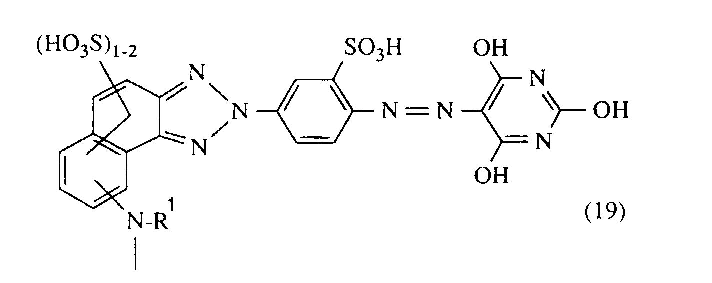 sowie Metallkomplexe von Farbstoffresten

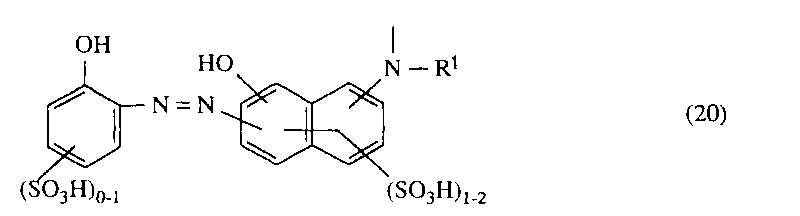

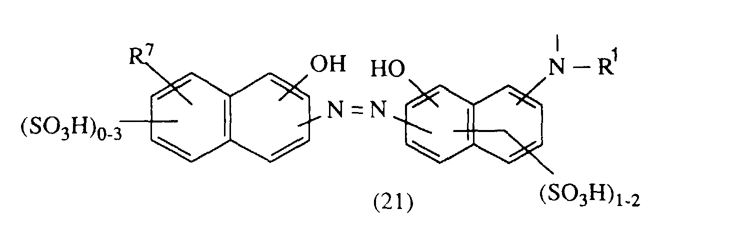

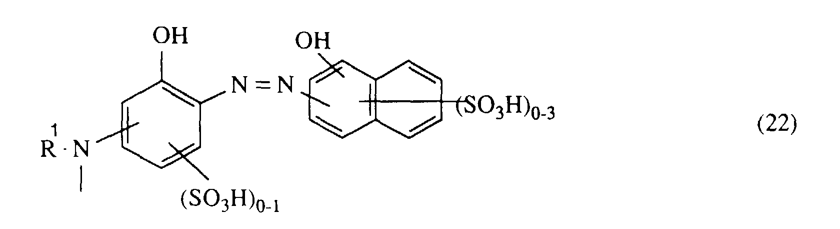

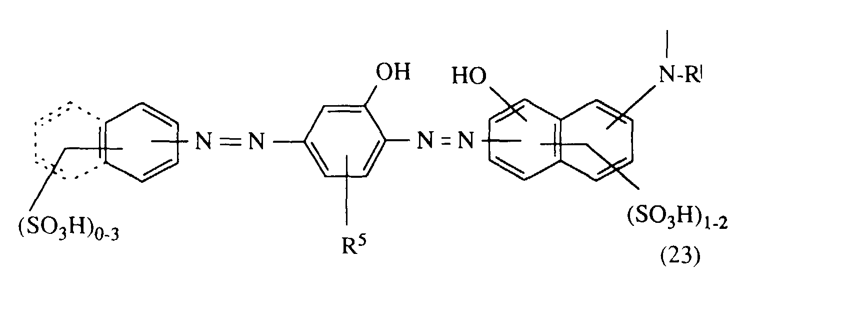

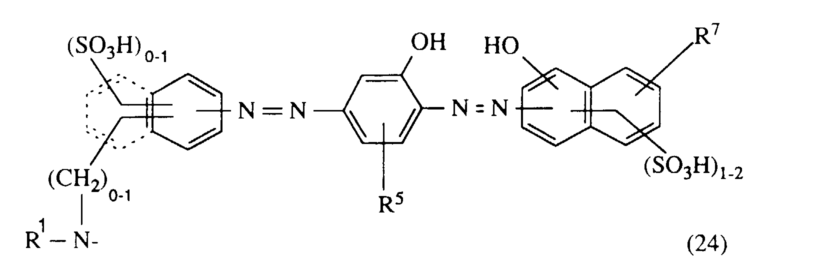

Als Metallatom sind Cu (1:1-Komplex) oder Cr und Co (1:2-Komplex) bevorzugt. Cr- und Co-Komplexe können die Azoverbindung der oben angegebenen Formel einmal oder zweimal enthalten, d.h., sie können symmetrisch oder mit beliebigen anderen Ligandengruppen unsymmetrisch aufgebaut sein.

Weiterhin steht A für 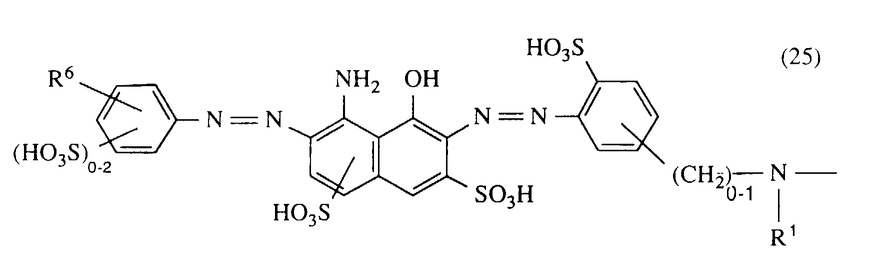 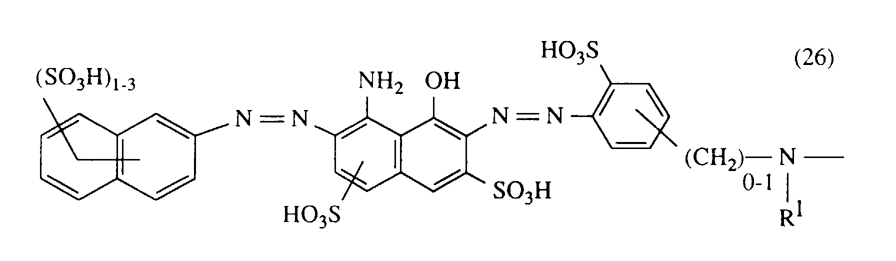 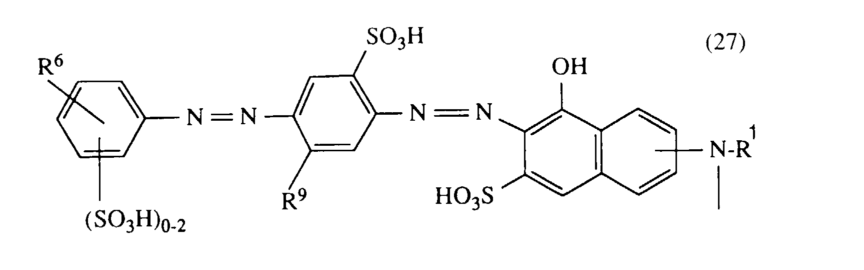 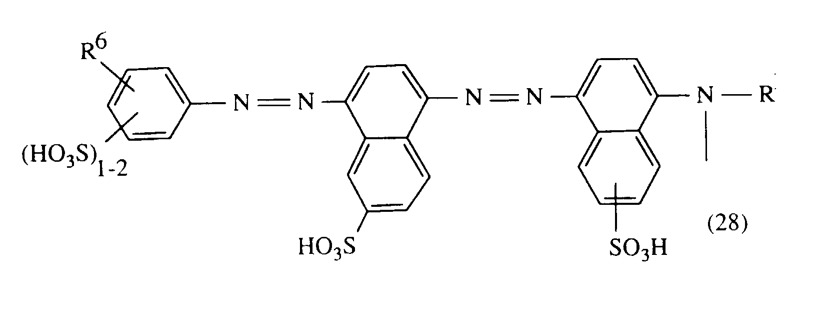 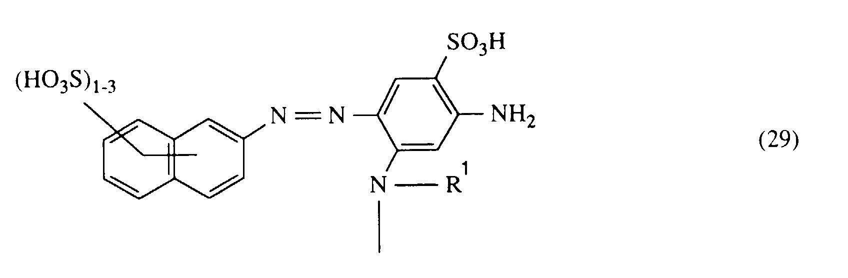 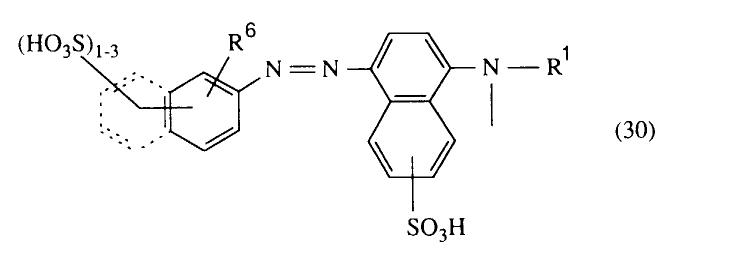 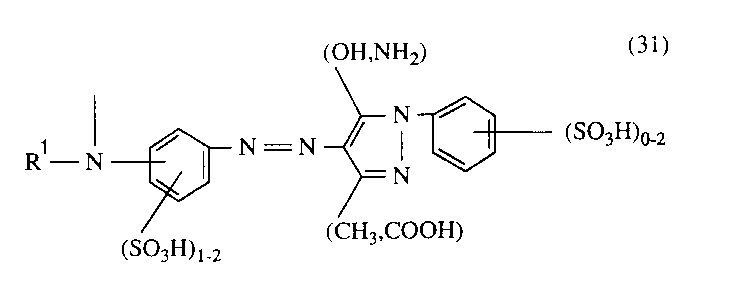 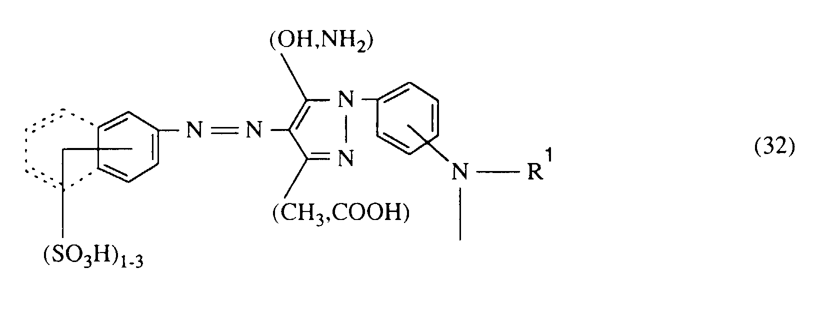 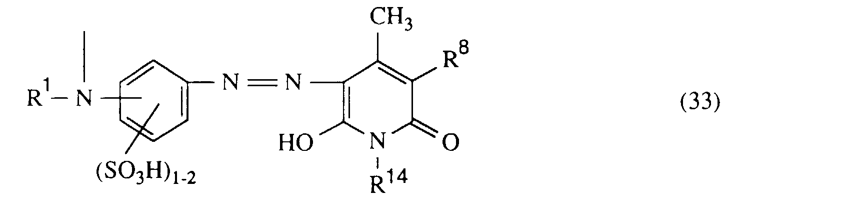 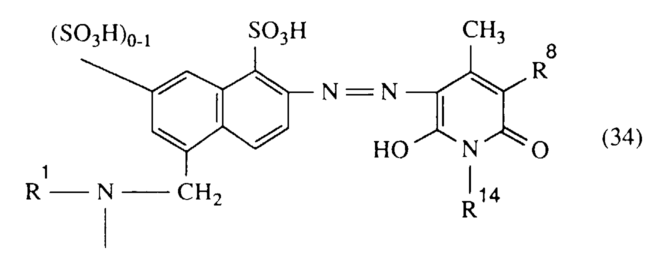 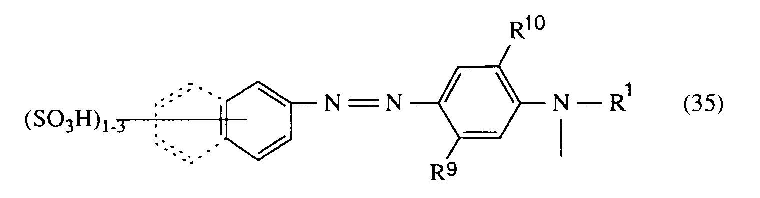 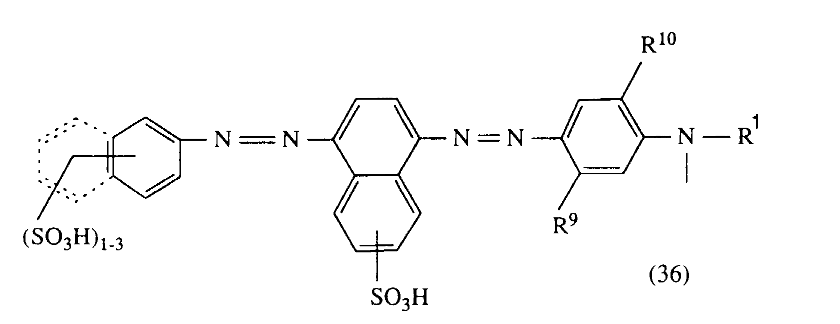 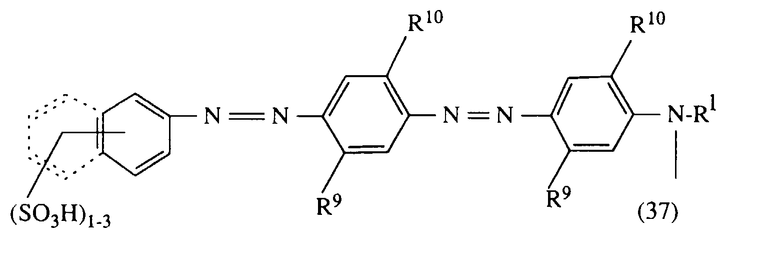 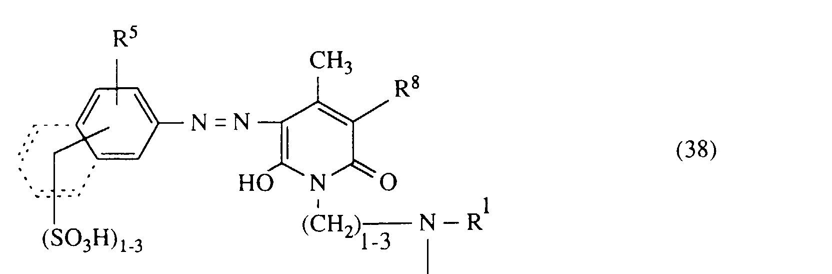 worin
Acyl z.B. Acetyl oder gegebenenfalls substituiertes Benzoyl ist,
- R¹⁴ =: H, C₁-C₂-Alkyl, gegebenenfalls substituiert durch SO₃H, NH₂,
- R¹ =: H, CH₃ oder C₂H₅,
- R⁵ =: H, CH₃, OCH₃ oder Cl,
- R⁶ =: H, C₁-C₄-Alkyl, C₁-C₄-Alkoxy, Cl, Br, COOH oder SO₂=CH₂ bzw. SO₂CH₂CH₂OSO₃H,
- R⁷ =: H, OH, NH₂, NHCOCH₃, NHCOPh, Cl, C₁-C₄-Alkoxy oder C₁-C₄-Alkyl,
- R⁸ =: H, SO₃H, CH₂SO₃H, Cl, C₁-C₄-Alkylsulfonyl, CN, Carbonamid, insbesondere CONH₂ und CH₂SO₃H,
- R⁹ =: H, C₁-C₄-Alkyl, C₁-C₄-Alkoxy, Cl, Br, Acylamino, insbesondere C₁-C₄-Alkylcarbonylamino oder Arylcarbonylamino wie gegebenenfalls substituiertes Phenylcarbonylamino, C₁-C₄-Alkylsulfonylamino, Amino-Phenylcarbonylamino, C₁-C₄-Alkylsulfonylamino, Arylsulfonylamino,
- R¹⁰ =: H, C₁-C₄-Alkyl, C₁-C₄-Alkoxy, OH, SO₃H.

Die durch Strichelungen angedeuteten kondensierten Ringe stehen für alternativ mögliche Naphthalinsysteme.

Weitere Beispiele für A sind 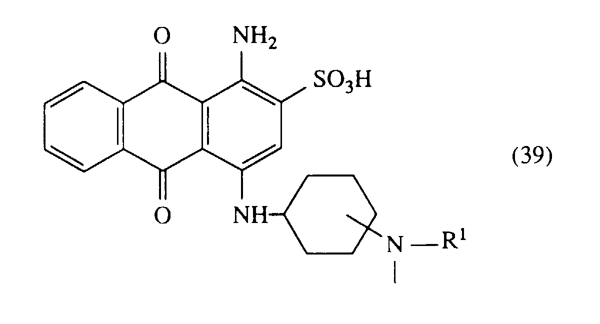 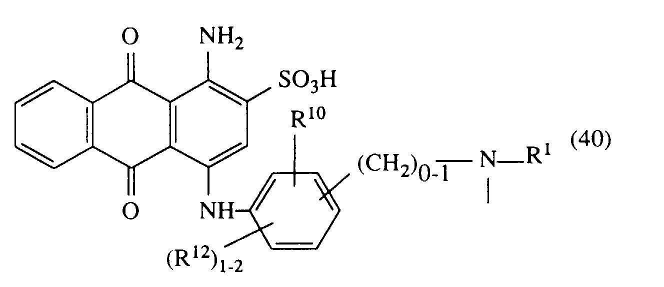 worin
- R¹⁰ =: H, Methyl, Methoxy oder SO₃H,
- R¹² =: H, Methyl oder Ethyl, 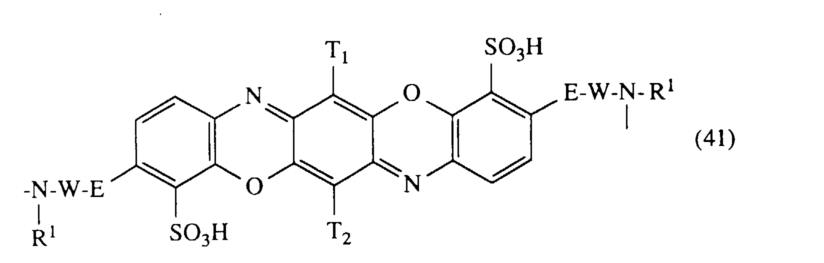 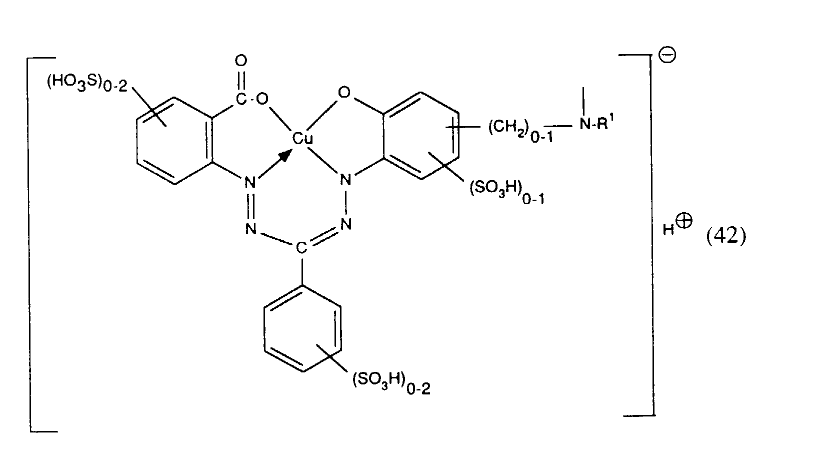 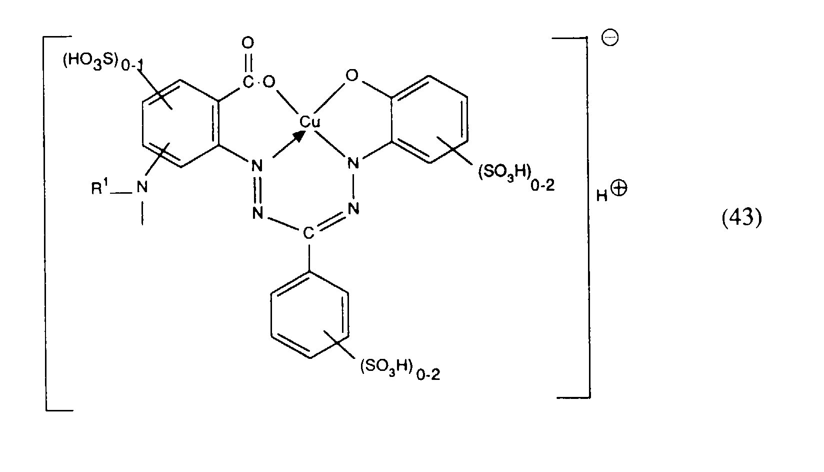 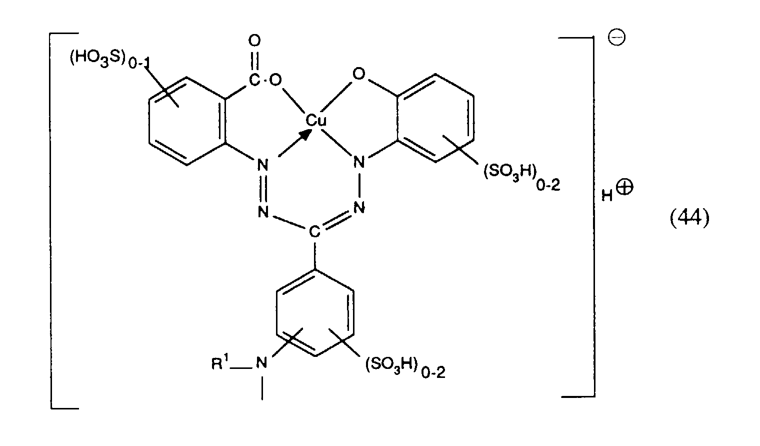 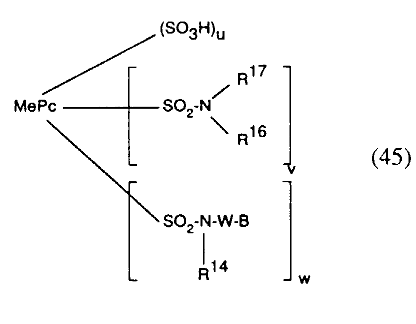
worin in Formel (45)
- Me =: Cu, Ni,
- Pc =: Rest eines Phthalocyanins
- u+v + w =: 3,4 - 4,0 mit der Maßgabe, daß
- u =: 0,8 - 2,0,
- v =: 0 - 1,0,
- w =: 1,0 - 3,0 ist und 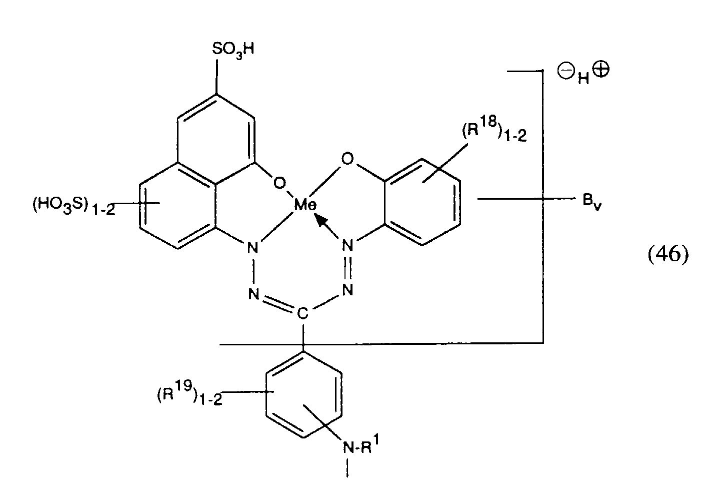
wobei in allen Formeln 39 - 46 bedeuten
- W: ein gegebenenfalls substituiertes Phenylen oder ein gegebenenfalls substituiertes aromatisch-aliphatisches Brückenglied oder ein gegebenenfalls durch Heteroatome wie NR¹³, O oder S enthaltende Gruppierungen unterbrochenes, geradkettiges oder verzweigtes C₁-C₆-Alkylen, das mit C₁-C₆-Alkoxy, OSO₃H, SO₃H, COOR oder Halogen substituiert sein kann,
- E =: -NR¹⁵- oder O,
- T_{1,}T₂=: unabhängig voneinander H, Cl, Br, C₁-C₂-Alkyl, OCH₃, OC₂H₅, Acylamino, C₁-C₂-Alkoxycarbonyl und
- R¹³, R¹⁵ =: unabhängig voneinander H, C₁-C₄-Alkyl, das durch OR', OSO₃H, SO₃H, COOR' oder Halogen substituiert sein kann und wobei innerhalb eines Brückengliedes W die Gruppe NR¹³ mit der Gruppe NR¹ auch einen heterocyclischen aliphatischen Ring bilden kann, und
- R¹, R': unabhängig voneinander H, CH₃ oder C₂H₅,
- R¹⁷ und R¹⁶ =: H, C₁-C₂-Alkyl, gegebenenfalls substituiert durch OH, OSO₃H, SO₃H oder COOH,
- R¹⁸, R¹⁹ =: unabhängig voneinander H, C₁-C₄-Alkyl, C₁-C₄-Alkoxy, OH, Halogen, COOH, NO₂, SO₃H, Sulfonamido, C₁-C₄-Alkylcarbonylamino, gegebenenfalls substituiertes Phenylcarbonylamino, C₁-C₄-Alkylsulfonylamino, gegebenenfalls substituiertes Phenylsulfonylamino,
- v, w =: 0 oder 1, wobei w ungleich v.

Die erfindungsgemäßen Gemische können in fester, insbesondere pulvriger Form oder in Granulatform vorliegen. Sie enthalten in der Regel zusätzlich Elektrolytsalze wie NaCl, KCI, Na₂SO₄, die aus der Synthese stammen können, weiterhin Puffersubstanzen wie Alkaliacetate, Alkaliphosphate oder -hydrogenphosphate, Na-Borat. Weiterhin können andere für Farbstoffpräparationen übliche Substanzen enthalten sein, beispielsweise hydrotrope Mittel, Netzmittel, Fixiermittel, Sikkative, Fungizide, Färbehilfsmittel.

Die Gemische können auch als wäßrige oder wäßrig-organische Lösung vorliegen, wobei der pH-Wert im allgemeinen bei etwa 4 bis 7 liegt.

Die erfindungsgemäßen Farbstoffmischungen lassen sich in an und für sich üblicher Weise herstellen, wie beispielsweise durch Vermischen der einzelnen festen Farbstoffkomponenten, die aus der Synthese durch Aussalzen oder Sprühtrocknung der Syntheselösung erhältlich sind, oder durch Vermischen der Syntheselösungen der einzelnen Farbstoffkomponenten und anschließender gemeinsamer Isolierung durch Aussalzen oder Sprühtrocknung. Hierbei können die üblichen, oben genannten Zusätze den Lösungen selbst, evtl. vor deren Sprühtrocknung, oder den festen Einzelkomponenten oder deren Mischungen zugegeben werden.

In den erfindungsgemäßen Farbstoffgemischen sind die Monochlortriazin-Farbstoffe (1) und die Monofluortriazin-Farbstoffe (2) im allgemeinen im Gewichtsverhältnis 95:5 bis 5:95 enthalten. Bevorzugtes Mischungsverhältnis ist 70:30 bis 30:70, insbesondere 60:40 bis 40:60.

Die Farbstoffe (1) und (2) sind bekannt oder in ihrem chemischen Aufbau bekannten Farbstoffen analog, so daß die per se noch nicht beschriebenen Farbstoffen analog den per se beschriebenen Farbstoffen hergestellt werden können.

Farbstoffe (1) und (2) sind beispielsweise beschrieben in DE-A-4 106 099, EP-A-70806, EP-A-70807, DE-A-2 614 550, EP-A-74928, EP-A-307 817, EP-A-141 367, EP-A-374 758 und EP-A-70808.

Die erfindungsgemäßen Gemische finden Verwendung zum Färben und Bedrucken von hydroxylgruppen- und amidgruppenhaltigen Materialien, insbesondere Cellulose.

Die in der heutigen Praxis verwendeten Kombinationen erwiesen sich für viele Anforderungen als ungeeignet, da für Kombinationsfärbungen verwendeten Einzelfarbstoffe häufig unterschiedliche Eigenschaften - wie z.B. Substantivität, Reaktivität, Migrationsverhalten, Salz- und Temperaturempfindlichkeit oder Abhängigkeit von Flottenverhältnis - besitzen.

Bei einer nach coloristischen Gesichtspunkten aufgestellten Kombination des üblichen Anwenders führen diese Eigenschaften vielfach zu einem ungleichmäßigen Aufziehen und Fixieren, besonders auf Kurzflottenfärbeaggregate, so daß ihre diesbezügliche Anwendung eingeschränkt ist.

Die erfindungsgemäßen Farbstoffgemische ziehen überraschenderweise Ton-in-Ton gleichmäßig auf die Faser auf und fixieren gleichmäßig auch bei unterschiedlichen Fixierbedingungen.

Die erfindungsgemäßen Gemische sind daher sehr gut geeignet für zahlreiche Färbeverfahren.

Erwähnt seien folgende:
Färben aus langer Flotte (Flottenverhältnis 1:30 → 1:5)
a) unter Erwärmen von 30-40°C auf 60-80°C unter Zusatz von Soda, Na-Bicarbonat oder NaOH
b) bei konstanter Temperatur, z.B. 30-80°C unter Zusatz von Soda oder Soda/NaOH,
c) nach der "all-in"-Methode, nämlich Lösen der Farbstoffmischung mit Alkali bei 30-50°C und anschließendes Erwärmen auf 60-80°C.

### Beispiel 1

100 Teile einer Baumwollwirkware werden bei 30°C mit 1000 Teilen einer wäßrigen Färbeflotte behandelt, welche
- 2: Teile einer eingestellten Farbstoffmischung bestehend aus
- 50: Teilen Farbstoff 2A
- 50: Teilen Farbstoff 1A 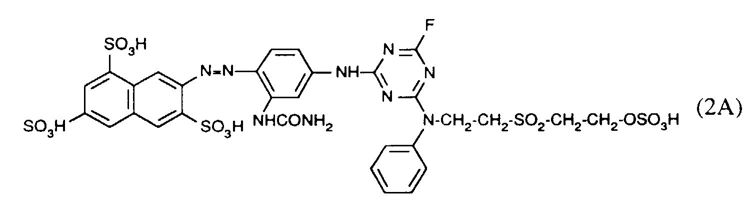 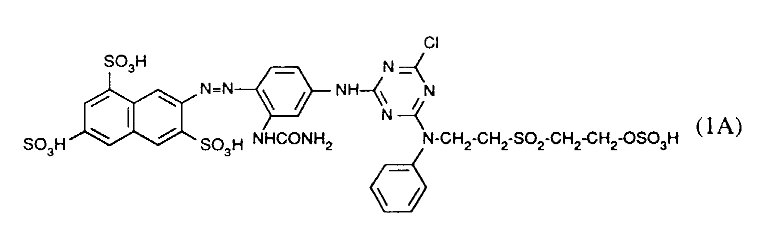
sowie
- 1/2: Teil Natriumbicarbonat
- 50: Teile Natriumchlorid und
- 20: Teile Soda (wasserfrei)
gelöst enthält.

Nach gleichmäßiger Verteilung des Farbstoffs auf dem Fasermaterial über 45 Minuten bei 30°C wird die Flotte in 30 Minuten auf 60°C erwärmt und 90 Minuten bei lebhafter Warenbewegung und guter Flottenzirkulation bei dieser Temperatur behandelt. Danach wird die Flotte abgelassen, zweimal bei 50°C und zweimal bei 80°C gespült. Daraufhin wird mit frischer Flotte aufgefüllt und auf 98°C erwärmt. Nach 10 Minuten Behandlung wird abgelassen, aufgefüllt und erneut 10 Minuten bei 98°C behandelt. Daraufhin wird abgelassen und kalt gespült.

Man erhält eine brillante Gelbfärbung mit guten Echtheitseigenschaften.

### Beispiel 2

100 Teile einer Baumwollwirkware werden bei 60°C mit 800 Teilen einer wäßrigen Färbeflotte behandelt, welche
- 1/2: Teil Natriumbicarbonat und
- 50: Teile Natriumchlorid enthält.

Anschließend wird in ca. 30 Minuten eine wäßrige Farbstofflotte von 200 Teilen, die
- 3: Teile einer eingestellten Farbstoffmischung bestehend aus
- 70: Teilen Farbstoff 2B
- 30: Teilen Farbstoff 1B enthält,
zudosiert. Nach 30 Minuten werden 20 Teile Soda (wasserfrei) zugegeben und unter lebhafter Warenbewegung und guter Flottenzirkulation bei 60°C gefärbt. Danach wird der Spülprozess wie in Beispiel 1 beschrieben durchgeführt.

Man erhält eine rote Färbung mit guten Echtheitseigenschaften.

Farbstoff 2B entspricht der Formel:

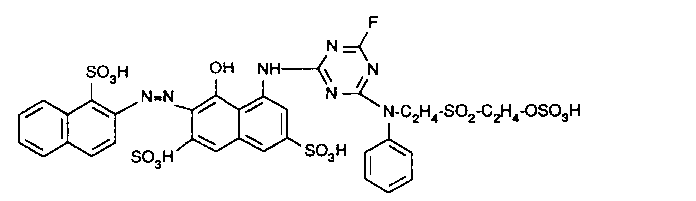

Farbstoff 1B entspricht der Formel:

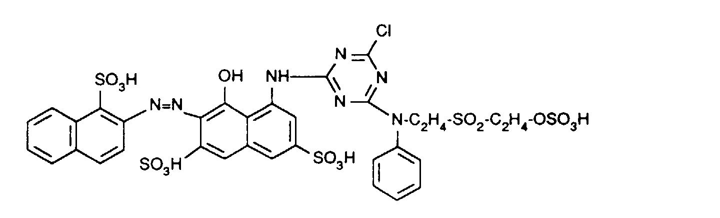

### Beispiel 3

100 Teile einer Baumwollwirkware werden bei 60°C mit 800 Teilen einer wäßrigen Färbeflotte behandelt, welche
- 1/2: Teil Natriumbicarbonat und
- 50: Teile Natriumchlorid enthält.

Anschließend wird in ca. 30 Minuten eine wäßrige Farbstofflotte von 200 Teilen, die
- 3: Teile einer eingestellten Farbstoffmischung bestehend aus
- 90: Teilen Farbstoff 2C
- 10: Teilen Farbstoff 1C enthält,
zudosiert. Nach 30 Minuten werden 20 Teile Soda (wasserfrei) zugegeben und unter lebhafter Warenbewegung und guter Flottenzirkulation bei 60°C gefärbt. Danach wird der Spülprozess wie in Beispiel 1 beschrieben durchgeführt.

Man erhält eine blaue Färbung mit guten Echtheitseigenschaften.

Farbstoff 2C entspricht der Formel:

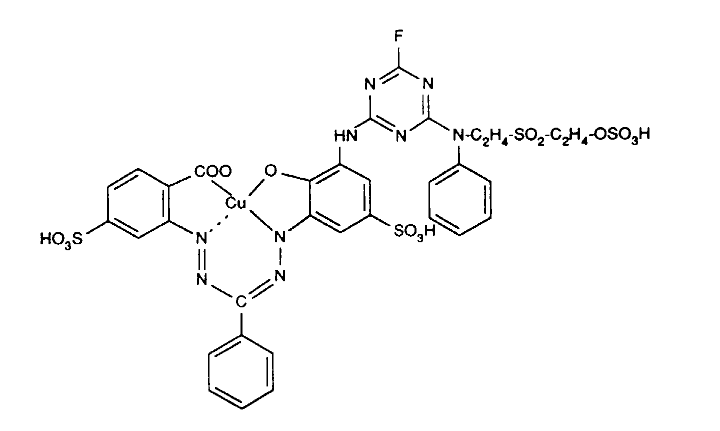

Farbstoff 1C entspricht der Formel:

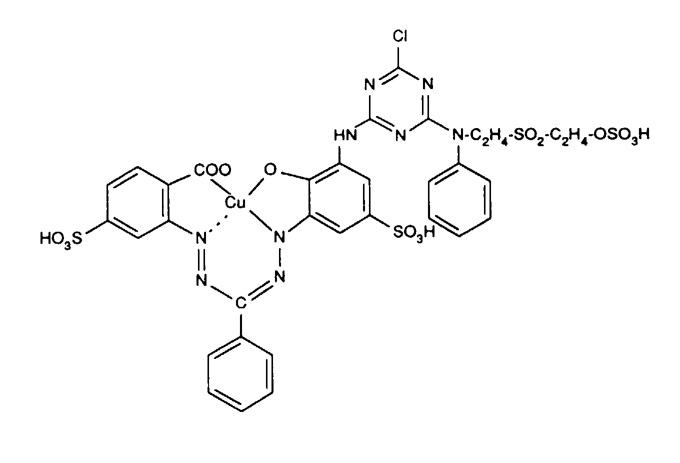

### Beispiel 4

100 Teile einer Baumwollwirkware werden bei 60°C mit 800 Teilen einer wäßrigen Färbeflotte behandelt, welche
- 1/2: Teil Natriumbicarbonat und
- 50: Teile Natriumchlorid enthält.

Anschließend wird in ca. 30 Minuten eine wäßrige Farbstofflotte von 200 Teilen, die
- 2,5: Teile einer eingestellten Farbstoffmischung bestehend aus
- 60: Teilen Farbstoff 2D
- 40: Teilen Farbstoff 1D enthält,
zudosiert. Nach 30 Minuten werden 20 Teile Soda (wasserfrei) zugegeben und unter lebhafter Warenbewegung und guter Flottenzirkulation bei 60°C gefärbt. Danach wird der Spülprozess wie in Beispiel 1 beschrieben durchgeführt.

Man erhält eine gelbe Färbung mit guten Echtheitseigenschaften.

Der Farbstoff 2D entspricht der Formel:

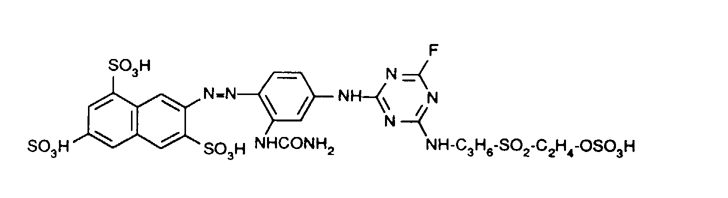

Der Farbstoff 1D entspricht der Formel:

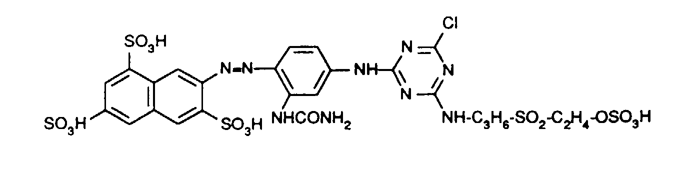

### Beispiel 5

100 Teile einer Baumwollwirkware werden bei 60°C mit 800 Teilen einer wäßrigen Färbeflotte behandelt, welche
- 1/2: Teil Natriumbicarbonat und
- 50: Teile Natriumchlorid enthält.

Anschließend wird in ca. 30 Minuten eine wäßrige Farbstofflotte von 200 Teilen, die
- 3: Teile einer eingestellten Farbstoffmischung bestehend aus
- 70: Teilen Farbstoff 2E
- 30: Teilen Farbstoff 1E enthält,
zudosiert. Nach 30 Minuten werden 20 Teile Soda (wasserfrei) zugegeben und unter lebhafter Warenbewegung und guter Flottenzirkulation bei 60°C gefärbt. Danach wird der Spülprozess wie in Beispiel 1 beschrieben durchgeführt.

Man erhält eine blaue Rotfärbung mit guten Echtheitseigenschaften.

Der Farbstoff 2E entspricht der Formel:

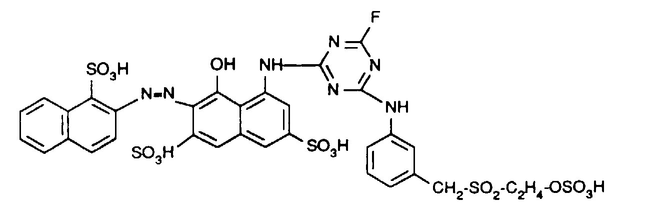

Der Farbstoff 1E entspricht der Formel:

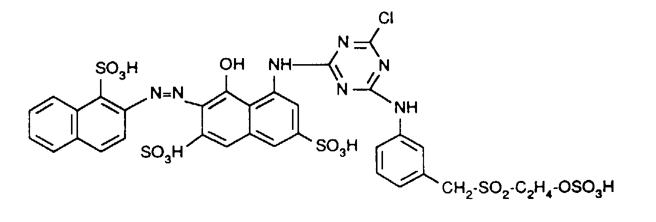

### Beispiel 6

100 Teile einer Baumwollwirkware werden bei 60°C mit 800 Teilen einer wäßrigen Färbeflotte behandelt, welche
- 1/2: Teil Natriumbicarbonat und
- 50: Teile Natriumchlorid enthält.

Anschließend wird in ca. 30 Minuten eine wäßrige Farbstofflotte von 200 Teilen, die
- 3,5: Teile einer eingestellten Farbstoffmischung bestehend aus
- 90: Teilen Farbstoff 2F
- 10: Teilen Farbstoff 1F enthält,
zudosiert. Nach 30 Minuten werden 20 Teile Soda (wasserfrei) zugegeben und unter lebhafter Warenbewegung und guter Flottenzirkulation bei 60°C gefärbt. Danach wird der Spülprozess wie in Beispiel 1 beschrieben durchgeführt.

Man erhält eine blaue Färbung mit guten Echtheitseigenschaften.

Der Farbstoff 2F entspricht der Formel:

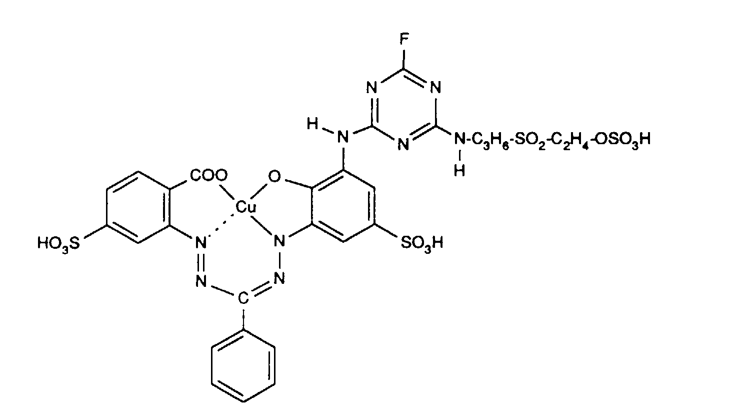

Der Farbstoff 1F entspricht der Formel:

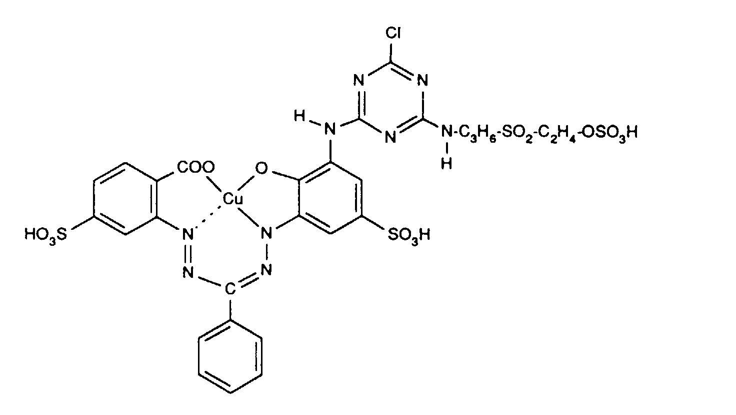

## Patentansprüche

1. Reaktivfarbstoffgemisch enthaltend einen oder mehrere Monochlortriazin-Farbstoffe der Formel (1) 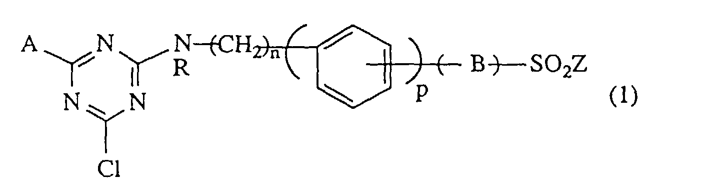 und einen oder mehrere Monofluortriazin-Farbstoffe der Formel (2) 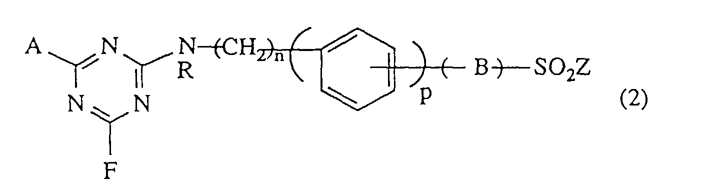 worin bedeuten
A chromophorer Rest
R H, C₁-C₄-Alkyl, mit OH, SO₃H, OSO₃H, SO₂Z, CN oder CO₂H substituiertes C₁-C₄-Alkyl, Benzyl, Phenyl oder mit Halogen, C₁-C₄-Alkyl, C₁-C₄-Alkoxy, SO₃H oder CO₂H substituiertes Phenyl,
n 0, 1, 2 oder 3
p 0 oder 1
B 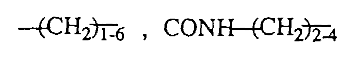 oder direkte Bindung und
Z Vinyl oder CH₂CH₂-Y, wobei Y ein unter alkalischen Bedingungen abspaltbarer Rest ist.

2. Farbstoffmischung gemäß Anspruch 1, dadurch gekennzeichnet, daß sie einen oder mehrere Monochlortriazin-Farbstoffe der Formel (3) 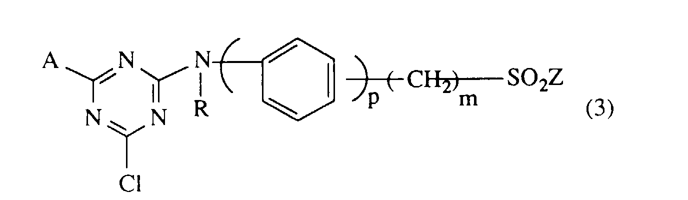 und einen oder mehrere Monofluortriazin-Farbstoffe der Formel (4) 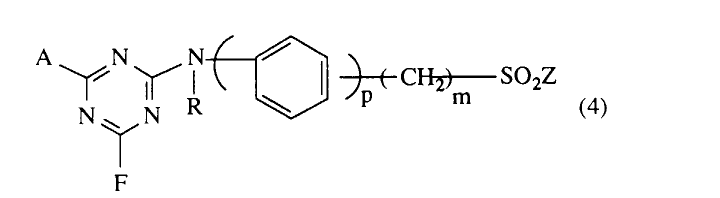 enthält, worin bedeuten
R H, C₁-C₄-Alkyl, Phenyl oder mit CH₃, SO₃H oder CO₂H substituiertes Phenyl,
m 0, 1, 2 oder 3 und
wobei die übrigen Substituenten die in Anspruch 1 angegebene Bedeutung haben.

3. Reaktivfarbstoffmischung gemäß wenigstens einem der vorhergehenden Ansprüche, dadurch gekennzeichnet, daß sie einen oder mehrere Monochlortriazin-Farbstoffe der Formel (5) 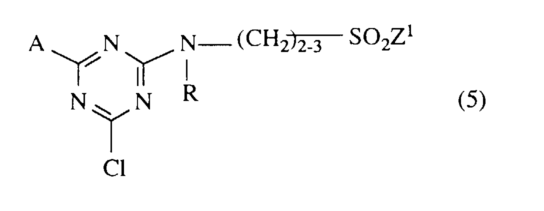 und einen oder mehrere Monofluortriazin-Farbstoffe der Formel (6) 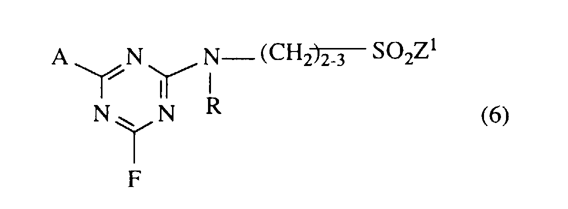 enthalten
worin bedeuten
R Phenyl oder H,
Z¹ Vinyl, CH₂CH₂Cl oder CH₂CH₂OSO₃H
und A die in Anspruch 1 genannte Bedeutung zukommt.

4. Reaktivfarbstoffmischung gemäß wenigstens einem der vorhergehenden Ansprüche, dadurch gekennzeichnet, daß sie einen oder mehrere Monochlortriazinfarbstoffe der Formel (7) 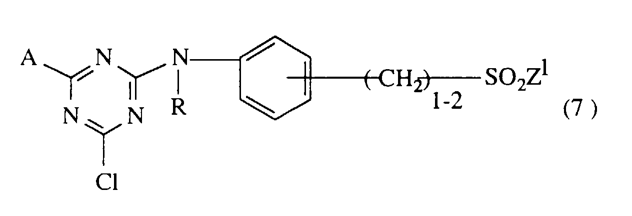 und einen oder mehrere Monofluortriazin-Farbstoffe der Formel (8) 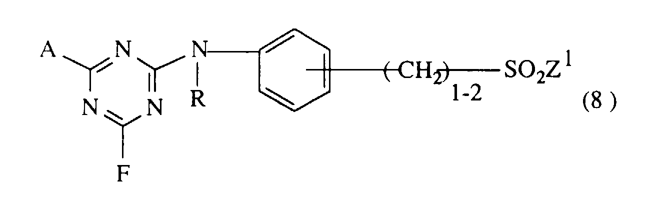 enthalten,
worin bedeuten
R H, C₂H₅, CH₂CH₂OH oder CH₂CH₂CO₂H
Z¹ Vinyl, CH₂CH₂Cl oder CH₂CH₂OSO₃H
und A die in Anspruch 1 genannte Bedeutung zukommt.

5. Reaktivfarbstoffmischung gemäß wenigstens einem der vorhergehenden Ansprüche, dadurch gekennzeichnet, daß A ein Azo-, Polyazo-, Metallkomplexazo-, Anthrachinon-, Formazan-, Phthalocyanin- oder Triphendioxazin-Rest ist.

6. Reaktivfarbstoffmischung gemäß wenigstens einem der vorhergehenden Ansprüche, dadurch gekennzeichnet, daß
R = H
Z = Vinyl oder -C₂H₄-OSO₃H.

7. Reaktivfarbstoffmischung gemäß Anspruch 1, dadurch gekennzeichnet, daß
R = unsubstituiertes Phenyl oder mit C₁-C₄-Alkyl, C₁-C₄-Alkoxy, SO₃H oder mit CO₂H substituiertes Phenyl
Z = Vinyl oder -C₂H₄-OSO₃H bedeutet.

8. Farbstoffmischung gemäß wenigstens einem der vorhergehenden Ansprüche, dadurch gekennzeichnet, daß die Mischung die Farbstoffe (1) und (2) im Gewichtsverhältnis 95:5 bis 5:95 enthält.

9. Farbstoffmischung gemäß wenigstens einem der vorhergehenden Ansprüche, dadurch gekennzeichnet, daß pro Teil Farbstoff (1) bis 50 Teile eines anorganischen Salzes und ein Puffer, der einen Pufferungsbereich zwischen pH 6,5 bis 7,5 ergibt, enthalten ist.

10. Farbstoffmischung gemäß wenigstens einem der vorhergehenden Ansprüche, dadurch gekennzeichnet, daß die Mischung 0,5 bis 10 Gew.-Teile eines organischen, anionischen Dispergiermittels und 0,5 Gew.-Teile eines Entstaubungsmittels, jeweils bezogen auf die gesamte Mischung, enthält.

11. Verfahren zum Färben von Cellulosefasern, Cellulosemischfasern mit einer Mischung aus Reaktivfarbstoffen, dadurch gekennzeichnet, daß eine Mischung gemäß wenigstens einem der vorhergehenden Ansprüche verwendet wird.

12. Textilien, die Fasem enthalten, die mit einem Farbstoff (1) der Formel 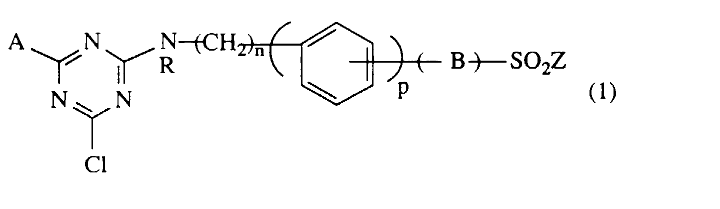 und einem Farbstoff 2 der Formel 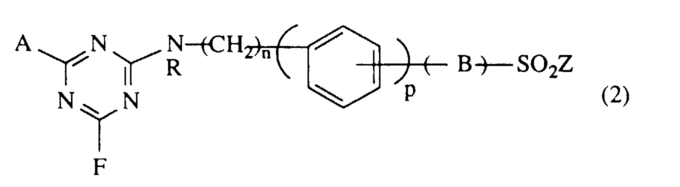 gefärbt worden sind, worin bedeuten
A chromophorer Rest
R H, C₁-C₄-Alkyl, mit OH, SO₃H, OSO₃H, SO₂Z, CN oder CO₂H substituiertes C₁-C₄-Alkyl, Benzyl, Phenyl mit Halogen, C₁-C₄-Alkyl, C₁-C₄-Alkoxy, SO₃H oder CO₂H substituiertes Phenyl,
n 0, 1, 2 oder 3
p 0 oder 1
B 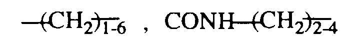 oder direkte Bindung und
Z Vinyl oder CH₂CH₂-Y, wobei Y ein unter alkalischen Bedingungen abspaltbarer Rest ist,
und wobei die Bedeutungen in Formel (2) unabhängig von den Bedeutungen in Formel (1) sind.

## Claims

1. Reactive dyestuff mixture containing one or more monochlorotriazine dyestuffs of the formula (1) 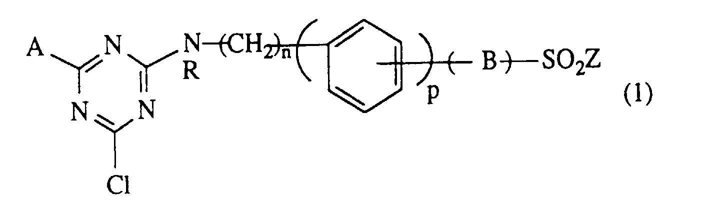 and one or more monofluorotriazine dyestuffs of the formula (2) 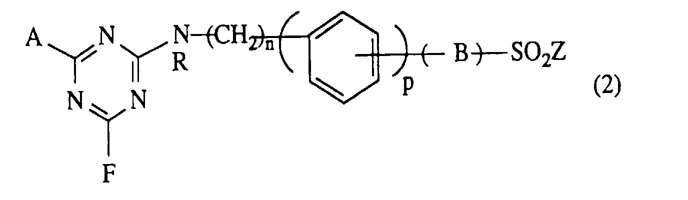 in which
A denotes a chromophoric radical
R denotes H, C₁-C₄-alkyl, OH-, SO₃H-, OSO₃H-, SO₂Z-, CN- or CO₂H-substituted C₁-C₄-alkyl, benzyl, phenyl or halogen-, C₁-C₄-alkyl-, C₁-C₄-alkoxy-, SO₃H- or CO₂H-substituted phenyl,
n denotes 0, 1, 2 or 3
p denotes 0 or 1
B denotes 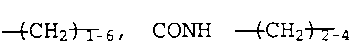 or a direct bond and
Z denotes vinyl or CH₂CH₂-Y where Y = a radical which can be eliminated under alkaline conditions.

2. Dyestuff mixture according to Claim 1, characterized in that it contains one or more monochlorotriazine dvestuffs of the formula (3) 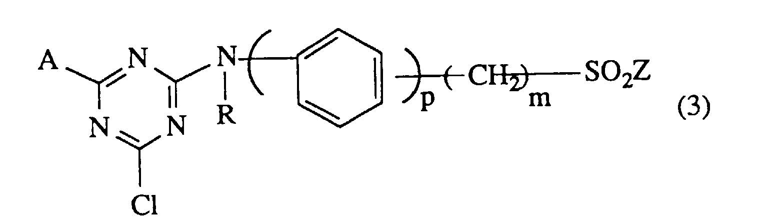 and one or more monofluorotriazine dyestuffs of the formula (4) 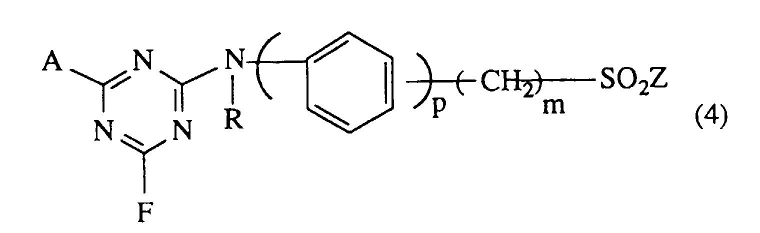 in which
R denotes H, C₁-C₄-alkyl, phenyl or CH₃-, SO₃H-or CO₂H-substituted phenyl,
m denotes 0, 1, 2 or 3 and
the remaining substituents have the meaning given in Claim 1.

3. Reactive dyestuff mixture according to at least one of the preceding claims, characterized in that it contains one or more monochlorotriazine dyestuffs of the formula (5) 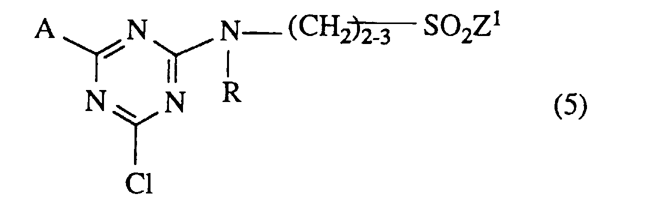 and one or more monofluorotriazine dyestuffs of the formula (6) 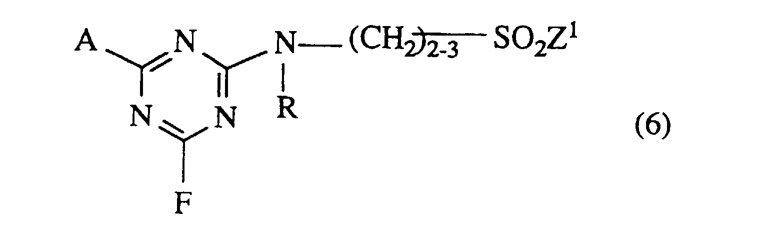 in which
R denotes phenyl or H,
Z¹ denotes vinyl, CH₂CH₂Cl or CH₂CH₂OSO₃H,
and A has the meaning given in Claim 1.

4. Reactive dyestuff mixture according to at least one of the preceding claims, characterized in that it contains one or more monochlorotriazine dyestuffs of the formula (7) 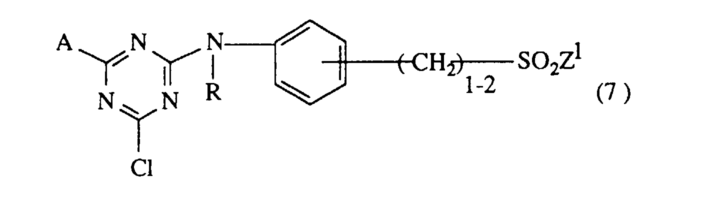 and one or more monofluorotriazine dyestuffs of the formula (8) 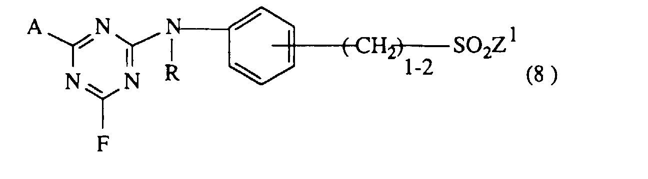 in which
R denotes H, C₂H₅, CH₂CH₂OH or CH₂CH₂CO₂H
Z¹ denotes vinyl, CH₂CH₂Cl or CH₂CH₂OSO₃H
and A has the meaning given in Claim 1.

5. Reactive dyestuff mixture according to at least one of the preceding claims, characterized in that A is an azo, polyazo, metal complex azo, anthraquinone, formazan, phthalocyanine or triphendioxazine radical.

6. Reactive dyestuff mixture according to at least one of the preceding claims, characterized in that
R is H
Z is vinyl or -C₂H₄-OSO₃H.

7. Reactive dyestuff mixture according to Claim 1, characterized in that
R denotes unsubstituted phenyl or C₁-C₄-alkyl-, C₁-C₄-alkoxy-, SO₃H- or CO₂H-substituted phenyl
Z denotes vinyl or -C₂H₄-OSO₃H.

8. Dyestuff mixture according to at least one of the preceding claims, characterized in that the mixture contains dyestuffs (1) and (2) in a weight ratio of 95:5 to 5:95.

9. Dyestuff mixture according to at least one of the preceding claims, characterized in that up to 50 parts of an inorganic salt and a buffer resulting in a buffering range of between pH 6.5 to 7.5 are present per part of dyestuff (1).

10. Dyestuff mixture according to at least one of the preceding claims, characterized in that the mixture contains 0.5 to 10 parts by weight of an organic, anionic dispersant and 0.5 part by weight of a dustproofing agent, both relative to the entire mixture.

11. Process for dyeing cellulose fibres, cellulose blend fibres with a mixture of reactive dyestuffs, characterized in that a mixture according to at least one of the preceding claims is used.

12. Textiles containing fibres which have been dyed with a dyestuff (1) of the formula 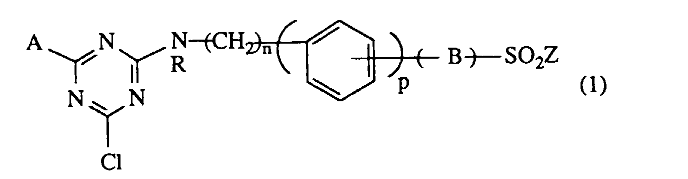 and a dyestuff 2 of the formula 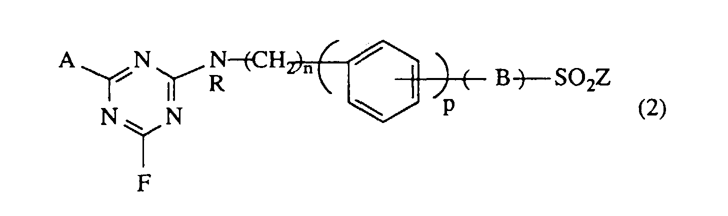 in which
A denotes a chromophoric radical
R denotes H, C₁-C₄-alkyl, OH-, SO₃H-, OSO₃H-, SO₂Z-, CN or CO₂H-substituted C₁-C₄-alkyl, benzyl, phenyl, halogen-, C₁-C₄-alkyl-, C₁-C₄-alkoxy-, SO₃H- or CO₂H-substituted phenyl,
n denotes 0, 1, 2 or 3
p denotes 0 or 1
B denotes 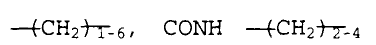 or a direct bond and
Z denotes vinyl or CH₂CH₂-Y, Y being a radical which can be eliminated under alkaline conditions,
and the meanings in formula (2) are independent of the meanings in formula (1).

## Revendications

1. Mélange de colorants réactifs contenant un ou plusieurs colorants de monochlorotriazines de formule (1) 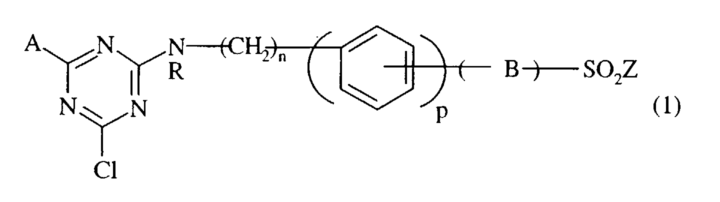 et un ou plusieurs colorants de monofluorotriazines de formule (2) 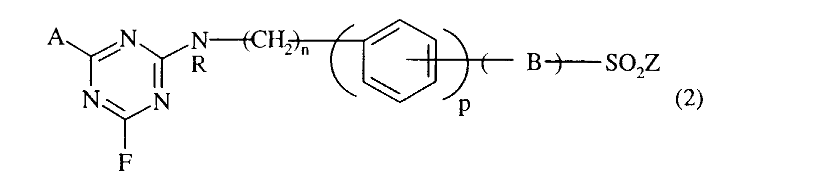 dans lesquelles
A représente un radical chromophore,
R représente H, un groupe alkyle en C₁-C₄, un groupe alkyle en C₁-C₄ substitué par OH, SO₃H, OSO₃H, SO₂Z, CN ou CO₂H, un groupe benzyle, phényle ou phényle substitué par les halogènes, des groupes alkyle en C₁-C₄, alcoxy en C₁-C₄, SO₃H ou CO₂H,
n est égal à 0, 1, 2 ou 3,
p est égal à 0 ou 1
B représente -(CH₂)-_{1 à 6}, CONH-(CH₂)-_{2 à 4} ou une liaison directe et
Z représente un groupe vinyle ou CH₂CH₂-Y dans lequel Y représente un substituant scindable en milieu alcalin.

2. Mélange de colorants selon la revendication 1, caractérisé en ce qu'il contient un ou plusieurs colorants de monochlorotriazines de formule (3) 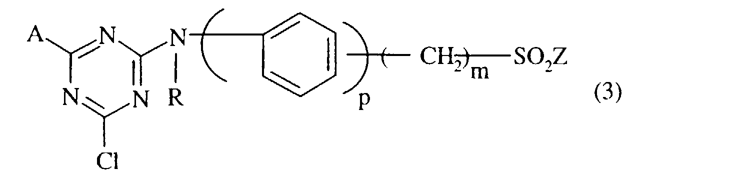 et un ou plusieurs colorants de monofluorotriazines de formule (4) 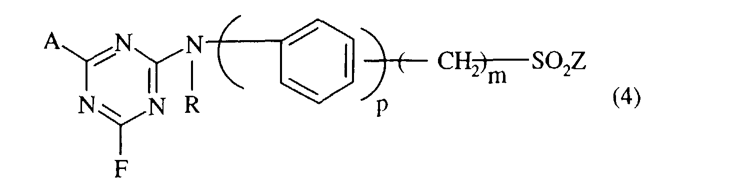 dans lesquelles
R représente H, alkyle en C₁-C₄, phényle ou phényle substitué par CH₃, SO₃H ou CO₂H,
m égal 0, 1, 2 ou 3 et
les autres symboles ont les significations indiquées dans la revendication 1.

3. Mélange de colorants réactifs selon au moins une des revendications qui précèdent, caractérisé en ce qu'il contient un ou plusieurs colorants de monochlorotriazines de formule (5) 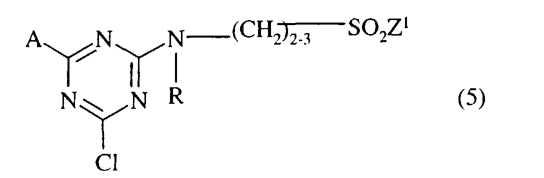 et un ou plusieurs colorants de monofluorotriazines de formule (6) 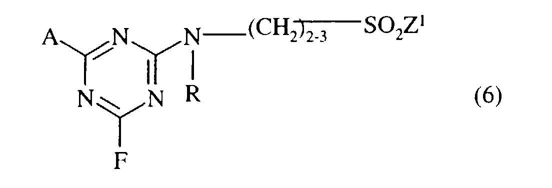 dans lesquelles
R représente un groupe phényle ou H,
Z¹ représente un groupe vinyle, CH₂CH₂Cl ou CH₂CH₂OSO₃H,
et A a les significations indiquées dans la revendication 1.

4. Mélange de colorants réactifs selon au moins une des revendications qui précèdent, caractérisé en ce qu'il contient un ou plusieurs colorants de monochlorotriazines de formule (7) 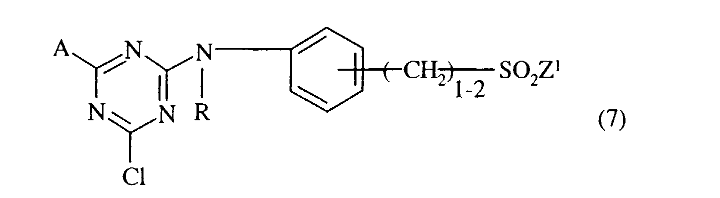 et un ou plusieurs colorants de monofluorotriazine de formule (8) 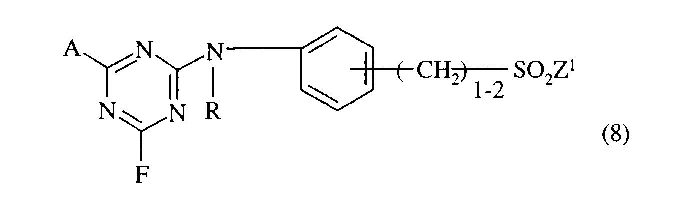 dans lesquelles
R représente H, C₂H₅, CH₂CH₂OH ou CH₂CH₂CO₂H,
Z¹ représente un groupe vinyle, CH₂CH₂Cl ou CH₂CH₂OSO₃H
et A a les significations indiquées dans la revendication 1.

5. Mélange de colorants réactifs selon au moins une des revendications qui précèdent, caractérisé en ce que A est un radical de dérivé azoïque, polyazoïque, complexe métallique de dérivé azoïque, anthraquinonique, de formazane, de phtalocyanine ou de triphénodioxazine.

6. Mélange de colorants réactifs selon au moins une des revendications qui précèdent, caractérisé en ce que
R = H
Z = vinyle ou -C₂H₄-OSO₃H

7. Mélange de colorants réactifs selon la revendication 1, caractérisé en ce que
R = phényle non substitué ou phényle substitué par alkyle en C₁-C₄, alcoxy en C₁-C₄, SO₃H ou CO₂H,
Z = vinyle ou -C₂H₄-OSO₃H.

8. Mélange de colorants selon au moins une des revendications qui précèdent, caractérisé en ce qu'il contient les colorants (1) et (2) dans des proportions relatives en poids de 95:5 à 5:95.

9. Mélange de colorants selon au moins une des revendications qui précèdent, caractérisé en ce que, pour une partie du colorant (1), il contient jusqu'à 50 parties d'un sel minéral et d'un tampon assurant un intervalle de pH de 6,5 à 7,5.

10. Mélange de colorants selon au moins une des revendications qui précèdent, caractérisé en ce que, sur son poids total, il contient 0,5 à 10 parties en poids d'un agent dispersant organique anionique et 0,5 partie en poids d'un agent dépoussiérant.

11. Procédé pour la teinture des fibres cellulosiques et des fibres cellulosiques mélangées à l'aide d'un mélange de colorants réactifs, caractérisé en ce que l'on utilise un mélange selon au moins une des revendications qui précèdent.

12. Textiles contenant des fibres qui ont été teintes à l'aide d'un colorant (1) de formule 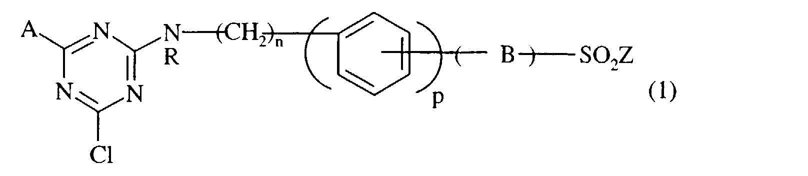 et d'un colorant (2) de formule 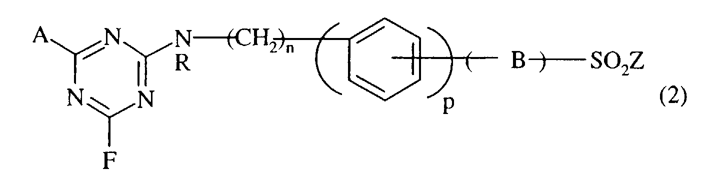 dans lesquelles
A représente un radical chromophore,
R représente H, un groupe alkyle en C₁-C₄, un groupe alkyle en C₁-C₄ substitué par OH, SO₃H, OSO₃H, SO₂Z, CN ou CO₂H, un groupe benzyle, phényle ou phényle substitué par des halogènes, des groupes alkyle en C₁-C₄, alcoxy en C₁-C₄, SO₃H ou CO₂H,
n est égal à 0, 1, 2 ou 3,
p est égal à 0 ou 1
B représente -(CH₂)-_{1 à 6}, CONH-(CH₂)-_{2 à 4} ou une liaison directe et
Z représente un groupe vinyle ou CH₂CH₂-Y dans lequel Y représente un substituant scindable en milieu alcalin,
les significations indiquées étant indépcndantes les unes des autres pour la formule (2) et pour la formule (1).
